# EUROPEAN PATENT SPECIFICATION

(11) **EP 0 497 324 B1**
(45) Date of publication and mention of the grant of the patent: **09.10.1996**
(21) Application number: 92101485.8
(22) Date of filing: 29.01.1992
(51) Int. Cl.: B65G 45/12, B65G 45/16

(54) **Conveyor belt cleaners**
Reinigungsvorrichtung für ein Förderband
Dispositif de nettoyage pour bande transporteuse

(30) Priority: 29.01.1991 US 647149
(43) Date of publication of application: 05.08.1992
(73) Proprietor: GORDON BELT SCRAPERS, INC., Benton, Illinois 62812 (US)
(72) Inventor: Gordon, James R., Benton, Illinois 62812 (US)
(74) Representative: Heusler, Wolfgang, Dipl.-Ing.

(56) References cited:
- EP-A- 0 262 272
- WO-A-87/05585
- DE-U- 8 903 188
- US-A- 3 999 649
- US-A- 4 658 949
- US-A- 4 779 716
- US-A- 4 962 845

## Description

The invention relates to a cantilever blade support for a secondary conveyer belt cleaner comprising the features mentioned in the preamble of claim 1, as known from US 4 854 443.

Multi-blade cleaners are frequently used with belt conveyors in mining and mineral storage operations and other such applications; a multi-blade device is often used as a secondary cleaner that scrapes the return run of the conveyor belt to remove material that would otherwise adhere to its surface. Single blade and multi-blade cleaners are both used as primary cleaners, scraping a part of the conveyor belt backed up by the head pulley. These conveyor belt cleaners usually operate in an environment that can only be described as hostile. The working conditions are frequently wet, dirty, and even corrosive. Continuing maintenance activity is a necessity due to inevitable wear on the cleaner blades, but is often rendered difficult by limited access space and the aforementioned adverse working conditions. In excessively wet or corrosive environments, maintenance is made more difficult by corrosion of metal mounting bolts, clamps, and the like. All of these difficulties are likely to be present in mining operations and also in industrial applications.

A secondary cleaner for a belt conveyor is likely to encounter substantial problems from shock forces applied to the cleaner blades. When large pieces of the conveyed material or debris, clinging to the conveyor belt, engages a cleaner blade, they may stress the blade or its support severely. The cleaner blades are also subject to impact damage from repeated engagement with joints between individual segments of the conveyor belt. Repeated shocks and impacts of this kind may lead to shutdown for repair or replacement of belt cleaner components, a time consuming and expensive procedure. Thus, it is important to minimize or avoid shock damage to the components of the conveyor belt cleaner as well as to compensate for the inevitable wear on belt cleaner blades due to continuing normal operation. Multi-blade cleaners are preferred, as secondary cleaners, because a multi-blade construction limits many stresses to only one blade of several.

Effective and efficient conveyor belt cleaners that utilize a torsion bias mechanism to maintain the cleaner blades in engagement with the conveyor belt are disclosed in United States Patent No. 4,533,036 issued to James R. Gordon August 6, 1985. Primary and secondary belt scrapers are disclosed. That conveyor cleaner, however, has the disadvantage that replacement of individual cleaner blades or blade support arms may require appreciable down-time because the blades or their supports are keyed to the torsion biased shaft. The blade support arms utilized in the secondary cleaners shown in that patent may be made of inexpensive steel rod with molded resin joints; the steel rods may be undesirable, in excessively wet and corrosive environments, due to excessive corrosion.

Other secondary conveyor belt cleaner arrangements are described in two United States patents to R. T. Swinderman, No. 4,643,293 issued February 17, 1987 and No. 4,917,231 issued April 17, 1990. In those two patents, longitudinally and torsionally resilient support arms, molded of resilient resins such as polyurethane are employed in secondary type belt cleaners to maintain the cleaner blades in close contact with the conveyor belt. Because the support arms are made entirely of resilient molded resin, they are not unduly prone to corrosion. In the later Patent No. 4,917,231, the disclosed blades are designed to maintain a constant "cleaning angle" at the blade/belt interface despite blade wear. When made of resilient material the blade support arms must be made wide enough to withstand the belt pressure and torsion forces; stiff support arms (e.g. metal) can be thinner, affording less material buildup on the arms.

Other secondary belt cleaners are disclosed in Gordon U.S. Patent No. 4,854,443, issued August 8, 1989. Each conveyor belt cleaner disclosed in that patent has an improved mount for each of its cleaner blade support arms, utilizing a keyed interference fit for a firm but displaceable mounting of the blade support arm. That patent also provides internal reinforcements in either or both ends of each blade support arm, affording a marked improvement in durability. Also U.S. Patent 4 779 716 issued October 25, 1988 to James R. Gordon describes a secondary conveyer belt cleaner comprising an axis which extends transverse across the belt with a plurality of blades being pivotably mounted to said axis by respective cantilever support arms arranged in mutually spaced relation along the length of said axis. The support arms and the blades are preferably made of a resilient resin like a dense polyurethane material so that the blades are urged against the belt for cleaning the same.

One problem with secondary belt cleaners that has not received adequate recognition derives from the use of unduly flexible, resilient support arms. Some limited resilience in the overall belt cleaner is necessary to accommodate belt joints and heavy, clinging, localized accumulations on the belts. But if each blade is readily displaceable independently of the others, as if often the case in prior constructions, undue displacement and vibration may reduce efficiency undesirably. The belt cleaner, blade (or blades) should afford an effective, consistent scraping action despite extensive wear. And corrosion should be precluded, along with effective shock protection for individual blades. Moreover, overly compliant blade action should be avoided to preclude excessive vibration.

Accordingly, it is an object of the invention to provide a new and improved secondary cleaner for a conveyer belt, suitable for use in mining and in heavy duty industrial applications, that provides for rapid and convenient replacement of scraper blades and individual blade support arms, and that affords improved shock protection and durability for the cleaner blades, support arm, and conveyer belt, in a construction that is simple, inexpensive, and highly durable.

This object is solved by the features included in claim 1. Particular embodiments of the invention are characterized in the subclaims.

The invention is predicated, to a substantial extent, on the realization that attemps to relieve shock forces through the use of longitudinally or torsionally resilient support arms in secondary belt cleaners, can be self-defeating and that markedly improved durability can be obtained with stiff support arms in a cleaner apparatus that provides operational resilience only in regard to other cleaner blade supports.

Accordingly, in one aspect the invention relates to a secondary conveyor belt cleaner comprising, in a particular embodiment:
a flexible blade of molded resin having, in cross section, a short base wall incorporating an elongated reinforcement-receiving receptacle and two longer curved side walls extending away from the base wall and converging at an elongated belt scraping edge;
and a blade mounting member for mounting the blade in the secondary belt cleaner, the mounting member including a stiff, elongated reinforcement seated in the reinforcement-receiving receptacle of the blade, a support wall projecting from the reinforcement in engagement with the base wall of the blade, and one element of two complementary plug-and-socket connection elements for mounting the blade unit on the outer end of a cantilever support arm that constitutes the other plug-and-socket connection element.

The invention will be now explained in more detail with reference to a particular embodiment as illustrated in the accompanying figures and described thereafter.

### BRIEF DESCRIPTION OF THE DRAWINGS

Fig. 1 is a plan view of a secondary conveyor belt cleaner for use with the invention;
Fig. 2 is a front elevation view taken approximately as indicated by line 2-2 in Fig. 1;
Fig. 3 is a side elevation view, partly in cross section, taken approximately as indicated by line 3-3 in Fig. 1 showing how the blade carrying cantilever arm is mounted to its support member;
Fig. 4 is a detail elevation view, partly in cross section, of one arm and blade of the belt cleaner of Figs. 1-3 showing particulars of the connection of the blade to the cantilever arm;
Fig. 5 is a detail plan view of one blade support arm for the belt cleaner of Fig. 4;
Fig. 6 is a detail end view of one blade support arm of Figs. 4 and 5;
Fig. 7 is a detail view of the metal portion of a blade unit of Fig 4;
Fig. 8 is a detail elevation view of the cantilever support arm according to the invention
Fig. 9 is a schematic illustration of some different blade patterns for the invention.

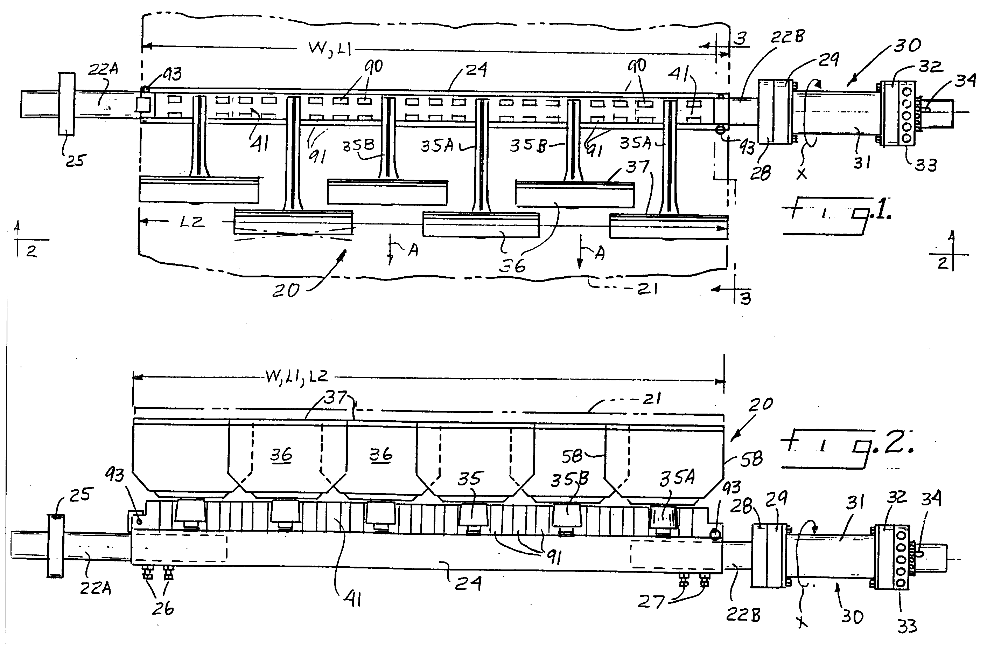

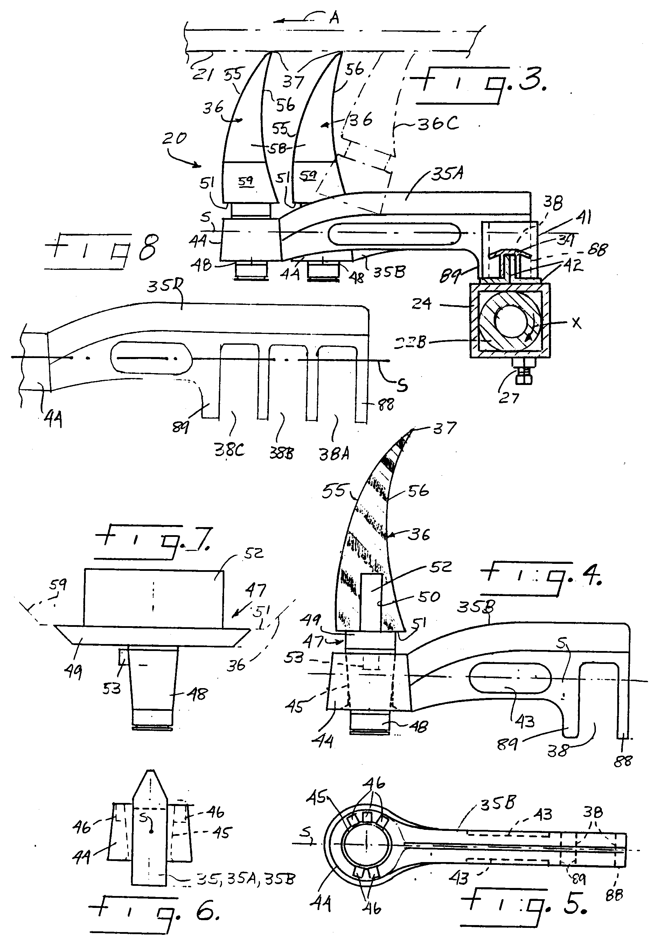

Figs. 1 and 2 illustrate a secondary conveyor belt cleaner 20 for cleaning a conveyor belt 21 of width W. Belt 21 moves in the direction of arrows A, Figs. 1 and 3. Belt cleaner 20 comprises two elongated shafts 22A and 22B that are aligned with each other and that are joined by an elongated support member 24, a rigid metal sleeve that extends transversely of belt 21 in spaced relation to the lower surface of the belt, the surface to be cleaned. Support member 24 has a length L1 approximately equal to belt width W; in the drawings they are shown equal. The left-hand end of shaft 22A, Figs. 1 and 2, is journalled in a bearing 25 supported by a fixed frame (not shown). Inwardly from bearing 25, shaft 22A is affixed to the elongated sleeve or support member 24 by suitable means such as a plurality of screws 26. Similar mounting screws 27 join the other end of the tubular support member 24 to shaft 22B. If desired, the shaft segments 22A, 22B may be a continuous shaft through the interior of sleeve 24.

The right-hand portion of shaft 22B, Figs. 1 and 2, extends through another bearing 28 mounted in the fixed frame (not shown) that affords general support for conveyor cleaner 20. Bearing 28 is connected to a flange 29 on a torsion tube 31 that is part of a torsion bias mechanism 30. Another flange 32 on the other end of torsion tube 31 is connected to a collar 33. Collar 33 is connectible to the outer end of shaft 22A through an angularly adjustable connection comprising a shear pin 34.

Conveyor belt cleaner 20 further comprises a plurality of cantilever blade support arms 35A and 35B . The cantilever blade support arms are mounted at spaced longitudinal positions along the support member, sleeve 24, and all project from member 24 in a predetermined fixed orientation. A corresponding plurality of cleaner blades 36 are included in belt cleaner 20, each blade 36 being mounted on the outer end of one of the cantilever arms. Cantilever arms 35A and 35B are all essentially identical in construction except that two different lengths are employed, alternately, as shown in Figs. 1 and 2, so that the cleaner blades 36 are disposed in slightly overlapping alignment across the width of conveyor belt 21 (see Fig. 2) to assure thorough cleaning of all of the bottom belt surface. If preferred, all of the blade support arms may be mounted to have the same overall length. In a secondary belt cleaner utilizing blade support arms of uniform length, the widths of blades 36 may be selected to allow a continuous, contiguous alignment of the blades across the conveyor belt width; see Fig. 8 and its description.

As thus far described, conveyor belt cleaner 20 corresponds generally to the constructions disclosed in the aforementioned Gordon United States Patents No. 4,533,036 and No. 4,854,443. In operation, the torsion bias mechanism 30 biases shaft 22A, support Sleeve 24, and shaft 22B toward rotation in the direction indicated by arrow X. As a consequence, the cleaning edges 37 of blades 36 are maintained in engagement with the bottom surface of conveyor belt 21, cleaning adherent material and debris from the belt surface. Both major and minor shocks affecting more than one blade are taken up, to at least some extent, by the torsion bias mechanism 30. The continuing bias afforded by mechanism 30 effectively compensates for gradual wear on the belt-engaging surfaces 37 of cleaner blades 36. The improvements represented by the present invention, as regards secondary belt cleaners, pertain primarily to the cantilever blade support arms, such as arms 35A and 35B, the mounting of blades 36 on the cantilever support arms, the mounting of the cantilever arms (e.g. 35A and 35B) on the transverse support 24, and the scraper blades 36 themselves including their internal reinforcements.

Figs. 3-7 illustrate constructive details of scraper blades 36, their cantilever support arms such as the arms 35A and 35B, the blade reinforcements, the manner in which the scraper blades 36 are mounted on the cantilever arms, and the mounting of those arms on the elongated main support 24.

Each cantilever blade support arm, whether of the short length 35B or the longer length 35A, is preferably of forged, unitary metal construction, having the shape shown in Figs. 3-6. Other metal working techniques may be used, though forging is the best procedure for making the cantilever arms. The preferred material for the cantilever blade support arms is aluminum and alloys of aluminum, both for corrosion resistance and light weight. More exotic materials might be utilized, but are likely to be unusually expensive. If a corrosion-prone metal is used for the cantilever arms (e.g., steel) the arms should be coated with a relatively thick layer of resin to protect them against corrosion.

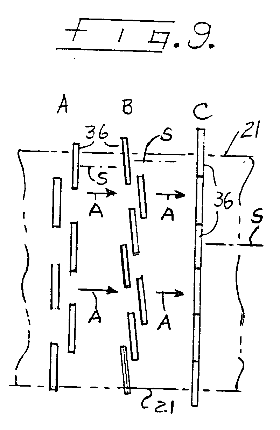

The anchor end of each cantilever support arm 35, the end projecting from support 24, includes open mounting slots 38A, 38B and 38C (see Fig 8) of which figures 4 and 5 show only one slot 38 formed with two projections 88 and 89 that fit into sockets 90 and 91, respectively, in an elongated resilient mounting block 41; see Fig. 1. The two projections 88 and 89 also fit tightly over a relatively rigid π - shaped guide member 39 molded into the resilient elastomeric resin mounting block 41 that extends the length of support 24. Keys 93 can be used to mount the resilient mounting block 41 on support 24; see Figs. 1 and 2. Block 41 and the mounts 88-91 permit each arm 35 some movement relative to the other blade support arms without introducing excessive movement as in some prior constructions. Guide member 39, usually metal, in turn, fits firmly onto an inverted T-shaped guide mount 42 which may be formed by two angle members, as illustrated. Guide member 42 is welded or otherwise affixed to support sleeve 24 and thus forms an integral part of that support. Guide member 42 may be intermittent or continuous along support 24.

The configuration of a cantilever blade support arm 35B is shown in detail in Figs. 4-6; the same construction applies to arm 35A except that arm 35A is longer than arm 35B. As previously noted, support arm 35B is preferably an aluminum forging. The inner, right-hand end of arm 35B, as seen in Figs. 4 and 5, includes the slot 38 and projections 88, 89 for mounting the arm on block 41 on support sleeve 24. The central portion of arm 35B is of reduced thickness in areas 43 to minimize its weight. The outer or free end of arm 35B terminates in a socket 44 having a circular, tapered internal wall 45 that is somewhat larger at the top than at the bottom. Thus, the interior of socket 44 is of inverted frusto-conical configuration. A plurality of key receptacles 46 are formed in socket 44, facing upwardly, as shown particularly in Figs. 5 and 6. The tapered, keyed construction used in the present invention minimizes blade vibration.

Each scraper blade 36 is mounted upon a support and reinforcement member 47; the construction of a typical blade mounting member 47 is best shown in Figs. 4 and 7. Member 47 includes a plug portion 48, a base or support wall portion 49 on which the base wall 51 of blade 36 rests, and a reinforcement portion 52 that projects upwardly into an elongated reinforcement-receiving groove or receptacle 50 in the base wall 51 of blade 36. Blade base wall 51 is longer than support wall 49 so that there is no ledge for material accumulation (Fig. 7). The plug portion 48 of member 47 is complementary to the socket 44 at the end of each blade support arm. Consequently, in the specific construction illustrated in Figs. 4-7, the external configuration of plug 48 is circular in cross section but the walls taper slightly, affording an inverted frusto-conical configuration that fits snugly into wall 45 of socket 44. A key 53 projects outwardly from plug 48 and is engaged in one of the keyways 46 of socket 44 to align the blade 36 associated with member 47 at a predetermined angle with respect to the cantilever support arm for the blade. As previously noted, the tapered sockets and plugs, plus the keys and the keyways, reduce blade vibration and afford superior versatility for blade orientation.

In each blade 36, the base wall 51 is the shortest of the blade walls. The front and rear walls 55 and 56 of each blade are substantially longer than base wall 51. Furthermore, walls 55 and 56 are curved and joined at the edge 37 that engages the surface of belt 21 to be cleaned (Fig. 3). This makes the end walls 58 generally triangular in configuration. The lower portions 59 of the end walls 58 of each blade may be inclined inwardly adjacent base wall 51, as shown particularly in Fig. 2.

The secondary belt cleaner 20 shown in Figs. 1-7 has two different sizes of cantilever blade support arms, the short arms 35B and the longer arms 35A. These are utilized to incorporate blades 36 in a staggered array, particularly shown in Figs. 1 and 2, to assure full coverage of the surface of belt 21 that is to be cleaned. However, it is not essential to have two different arm sizes; a single arm 35D, as shown in Fig. 8, can be employed to produce two or even three or more cantilever arm lengths. This has the dual advantage of eliminating any need to stock two or more types of cantilever arm and increasing the flexibility of the possible blade arrangements, as discussed more fully hereinafter. Arm 35D, Fig. 8, utilizes the same construction as arms 35A and 35B but is provided with three different mounting slots 38A, 38B, and 38C. It is thus seen that arm 35D allows for mounting each blade 36 (Fig. 3) at any of three different distances from support sleeve 24.

Fig. 9 illustrates three of the various secondary scraper blade deployments that can be attained with the present invention. The arrangement shown in Fig. 9A corresponds to the deployment of Figs. 1-3. The Fig. 9A distribution can be realized with all of the blades 36 deployed in the sockets 44 of their support arms so that the blades are aligned at right angles to the axes S of those support arms. The cantilever arms may be of different lengths as in the case of arms 35A and 35B or the same arrangement can be obtained with uniform arms 35D as shown in Fig. 8, employing different mounting receptacles such as the receptacles 38A and 38C, or 38A and 38B, or even 38B and 38C.

Part B of Fig. 9 shows a different arrangement that requires three different lengths of cantilever support arms for the scraper blades 36. In each instance the blade 36 is aligned at a limited, acute angle relative to the axis S of its support arm. An angle of about 5° is shown; using multiple key receptacles 46 as shown in Fig. 5, a range of about 5° to 25° is readily obtainable. Larger angles are often desirable to minimize the impact of belt splices; angle variations also afford better cleaning in some applications. This is realized quite easily with the keys 53 and keyways 46 of the preferred construction for the cantilever arms of the present invention, as described in connection with Figs. 4-7. On the other hand, the arrangement shown in Fig. 9B is most easily realized with support arms 35 of the kind shown in Fig. 8, since those cantilever support arms effectively provide for three different lengths and hence three different displacements from a given transverse support member 24 (Figs. 1-3).

Yet another arrangement is shown in Fig. 9C. Here, the blades 36 are arranged end to end. The cantilever support arms for these blades can all be of the same construction and length and the blades are all oriented at 90° to the cantilever arm axes. Any of the cantilever arms can be used. It will be recognized that a substantial number of other, different patterns for the blades, extending across belt 21, can be readily obtained. Fig. 9 shows all blades of uniform size, but different blade widths and varying blade angles may be used in one belt cleaner when desired.

In all embodiments of the present invention, the shape of the scraper blades, with curved elongated walls tapering toward each other from a short base wall, allows for longer wear than with previously known constructions. With increasing wear, there is less tendency for the blade to bend or "give", a characteristic of this construction that increases blade longevity. The rigid construction for cantilever arms 35, 35A, 35B, 35C in the secondary belt cleaner versions of the invention minimize vibration while at the sane time allowing adequate compensation for belt joints and for accumulations of debris clinging to the belt that may affect individual secondary scraper blades. In the secondary scraper, the stiff (preferably metal) reinforcement 52 at the base of each blade minimizes vibration without undue tendency toward blade damage, particularly in view of the resilient mounting of each cantilever arm on transverse support 24 as provided by resilient block 41.

For blades 36, polyurethane is the preferred resin, though other resilient resins can be used. Polyurethane in a durometer range of 75 to 85 Shore D is preferred. The same material can be used for the resilient mounting block 41 in the secondary belt cleaners. For the rigid elements, metal is preferred, though rigid resin or laminate members could be employed in some instances, as for mounting member 47, reinforcement/guide 42, or members 39.

As shown in the drawings, the preferred blades 36 are generally triangular in cross-section, having a short base wall with a reinforcement-receiving groove and two longer, curved side walls, concave in the same direction, converging at a belt scraping edge. One advantage of such blades is the fact that they remain useful even if they wear down a considerable part of their height. The radii of curvature of the two side walls 55, 56 may be different from each other, the radius of the outer curve may be somewhat greater than the radius of the inner curve.

## Claims

1. A cantilever blade support (24,25) for a secondary conveyor belt cleaner (20), for supporting a flexible blade (36) connected thereto by means of two complementary plug-and-socket connection elements (44,48), said cantilever blade support comprising an elongated, support arm (35) having an inner anchor end (38) and an outer blade support end (44), **characterized by** a plurality of mounting receptacles (38A, B,C), at the inner end of said stiff arm (35D), displaced longitudinally on said arm, for mounting said arm on a transverse support member (24,41) of said secondary conveyor belt cleaner so that said support arm has any one of a corresponding plurality of effective arm lengths, and by a blade mounting member (47) being connected through said plug-and-socket elements (44,48) to the outer end of said arm (35D).

2. Blade support according to claim 1, **characterized in that** said cantilever arm (35D) is of forged, corrosion-resistant metal.

3. Blade support according to claim 1, **characterized in that** said cantilever arm (35D) is of forged metal coated with a layer of corrosion-resistant resin.

4. Blade support according to claim 2 or 3, **characterized in that** said metal is aluminum.

5. Blade support according to claim 1, **characterized in tha**t said plug (48) includes a key (53) and said socket (44) includes a plurality of key-ways (46) for receiving said key, so that said blade (36) can be mounted on said cantilever arm (35D) at a plurality of different angular orientations.

6. Blade support according to claim 5, **characterized in that** said plug (48) and said socket (44) are of complementary frusto-conical configuration.

7. Blade support according to claim 1, **characterized by** said mounting member (47) including a stiff, elongated reinforcement (52) seated in a reinforcement-receiving receptacle (50) of the blade, a support wall (49) projecting from said reinforcement in engagement with the base wall (51) of said blade (36), and one element (48) of said two complementary plug-and-socket connection elements (44,48).

8. Blade support according to claim 7, **characterized in that** the connection element of said blade mounting member (47) is a plug element (48) of said plug-and-socket connection and is of tapered configuration.

9. Blade support according to claim 1, **characterized in that** said blade mounting member (47) is formed of metal.

10. Blade support according to claim 9, **characterized in that** said blade mounting member (47) is a metal casting.

## Patentansprüche

1. Auslegerklingenträger (24,25) für eine sekundäre Förderbandreinigungsvorrichtung (20) zum Tragen einer damit mittels zweier komplementärer Stecker- und Buchsen-Verbindungselemente (44,48) verbundenen flexiblen Klinge (36), wobei der Auslegerklingenträger einen langgestreckten Trägerarm (35) mit einem inneren Verankerungsende (38) und einem äußeren Klingenträgerende (44) umfaßt, **gekennzeichnet durch** eine Anzahl von Befestigungsaufnahmen (38A,B,C) an dem inneren Ende des steifen Arms (35D), die longitudinal auf dem Arm versetzt sind, zum Befestigen des Arms auf einem Querträgerelement (24,41) des sekundären Förderbandreinigers, so daß der Trägerarm jedwede einer entsprechenden Anzahl von effektiven Armlängen hat, und durch ein Klingenbefestigungselement (47), das durch die Stecker- und Buchsen-Elemente (44,48) mit dem äußeren Ende des Arms (35D) verbunden ist.

2. Klingenträger nach Anspruch 1, **dadurch gekennzeichnet**, daß der Auslegerarm (35D) aus geschmiedetem, korrosionsbeständigem Metall ist.

3. Klingenträger nach Anspruch 1, **dadurch gekennzeichnet**, daß der Auslegerarm (35D) aus geschmiedetem Metall ist, das mit einer Lage von korrosionsbeständigem Harz beschichtet ist.

4. Klingenträger nach Anspruch 2 oder 3, **dadurch gekennzeichnet**, daß das Metall Aluminium ist.

5. Klingenträger nach Anspruch 1, **dadurch gekennzeichnet**, daß der Stecker (48) einen Keil (53) enthält und die Buchse (44) eine Anzahl von Keilwegen (46) zum Aufnehmen des Keils enthält, so daß die Klinge (36) auf dem Auslegerarm (35D) in einer Anzahl von verschiedenen Winkelorientierungen befestigt werden kann.

6. Klingenträger nach Anspruch 5, **dadurch gekennzeichnet**, daß der Stecker (48) und die Buchse (44) von komplementärer kegelstumpfförmiger Konfiguration sind.

7. Klingenträger nach Anspruch 1, **dadurch gekennzeichnet**, daß das Befestigungselement (47) eine steife, langgestreckte Verstärkung (52), die in einer verstärkungsaufnehmenden Aufnahme (50) der Klinge sitzt, eine von der Verstärkung vorspringende Stützwand (49), in Anlage an der Basiswand (51) der Klinge (36), sowie ein Element (48) der zwei komplementären Stecker- und Buchsen-Verbindungselemente (44,48) enthält.

8. Klingenträger nach Anspruch 7, **dadurch gekennzeichnet**, daß das Verbindungselement des Klingenbefestigungselements (47) ein Steckerelement (48) der Stecker- und Buchsen-Verbindung ist und von kegeliger Konfiguration ist.

9. Klingenträger nach Anspruch 1, **dadurch gekennzeichnet**, daß das Klingenbefestigungselement (47) aus Metall gebildet ist.

10. Klingenträger nach Anspruch 9, **dadurch gekennzeichnet**, daß das Klingenbefestigungselement (47) ein Metallgußteil ist.

## Revendications

1. Support de lame en porte-à-faux (24,25) pour un dispositif (20) de nettoyage secondaire d'une bande transporteuse, destiné à supporter une lame flexible (36) reliée au support au moyen de deux éléments de liaison complémentaires mâle et femelle (44,48), ce support de lame en porte-à-faux étant constitué par un bras support allongé (35) présentant une partie extrême interne d'ancrage (38) et une partie extrême externe (44) supportant la lame, caractérisé en ce qu'il comprend une pluralité de creux de montage (38A,B,C) à l'endroit de la partie extrême interne du bras rigide (35D), décalés dans le sens longitudinal sur le bras, pour permettre le montage du bras sur un élément support transversal (24,41) du dispositif de nettoyage secondaire d'une bande transporteuse de telle façon que le bras support puisse avoir une longueur quelconque parmi une pluralité correspondante de longueurs effectives du bras, et un organe (47) de montage de la lame est connecté, par l'intermédiaire des éléments de liaison mâle et femelle (44,48), à la partie extrême externe du bras (35D).

2. Support de lame suivant la revendication 1 caractérisé en ce que le bras en porte-à-faux (35D) est une pièce métallique forgée, résistant à la corrosion.

3. Support de lame suivant la revendication 1 caractérisé en ce que le bras en porte-à-faux (35D) est une pièce métallique forgée revêtue d'une couche de résine résistant à la corrosion.

4. Support de lame suivant l'une quelconque des revendications 2 ou 3 caractérisé en ce que le métal est l'aluminium.

5. Support de lame suivant la revendication 1 caractérisé en ce que l'élément mâle (48) comporte une clavette (53) et l'élément femelle (44) comporte une pluralité de chemins de clavette (46) pour recevoir la clavette de telle façon que la lame (36) puisse être montée sur le bras en porte-à-faux (35D) avec une pluralité d'orientations angulaires différentes.

6. Support de lame suivant la revendication 5 caractérisé en ce que l'élément mâle (48) et l'élément femelle (44) ont des formes tronconiques complémentaires.

7. Support de lame suivant la revendication 1 caractérisé en ce que l'élément de montage (47) comporte un organe de renfort allongé et rigide (52) engagé dans un creux de réception de renfort (50) de la lame, une paroi support (49) faisant saillie à partir de l'organe de renfort et en contact avec la paroi de base (51) de la lame (36), et un élément (48) des deux éléments de liaison complémentaires mâle et femelle (44,48).

8. Support de lame suivant la revendication 7 caractérisé en ce que l'élément de liaison de l'élément de montage de la lame (47) est un élément mâle (48) de la connexion à éléments mâle et femelle et il a une forme convergente.

9. Support de lame suivant la revendication 1 caractérisé en ce que l'élément de montage de la lame (47) est réalisé en métal.

10. Support de lame suivant la revendication 9 caractérisé en ce que l'élément de montage de la lame (47) est une pièce métallique coulée.
